(19) Europäisches Patentamt
European Patent Office
Office européen des brevets

(11) **EP 4 629 153 A1**

(12) **EUROPEAN PATENT APPLICATION**

(43) Date of publication:
**08.10.2025 Bulletin 2025/41**

(21) Application number: **24168517.1**

(22) Date of filing: **04.04.2024**

(51) International Patent Classification (IPC):
*G06Q 20/40* (2012.01)      *G06F 16/901* (2019.01)

(52) Cooperative Patent Classification (CPC):
G06Q 20/4016

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Mastercard International Incorporated Purchase, NY 10577 (US)**

(72) Inventors:
• **MALEKI, Mehrdad**
  **Maynooth, W23TR81 (IE)**
• **FLINTER, Stephen Patrick**
  **Dublin, D6WDR68 (IE)**
• **FLOWERDEW, Thomas**
  **Filby, NR29 3HD (GB)**

(74) Representative: **Murgitroyd & Company**
  **165-169 Scotland Street**
  **Glasgow G5 8PL (GB)**

(54) **METHOD AND SYSTEM FOR ANALYSING A NETWORK OF INFORMATION**

(57)      A computer-implemented method for analysing a network of information comprising a plurality of interconnected nodes. The method comprises: accessing a graph dataset (402) representative of a graph comprising a plurality of nodes and a plurality of directed edges; updating the graph dataset (404); and, for each pair of nodes in the plurality of nodes, calculating a similarity score (406) using the updated graph dataset. The similarity score is indicative of the similarity between the nodes for which the similarity score is calculated. The graph dataset comprises an initial risk parameter for each node and an initial weight for each directed edge. Updating the graph dataset (404) comprises applying a diffusion algorithm to the graph dataset until a predetermined condition is met. The updated graph dataset comprises an updated risk parameter for each node.

Figure 4

**Description**

**FIELD OF THE INVENTION**

The present disclosure relates to methods and tools for analysing a network of information. The present disclosure more particularly relates to analysing and detecting links between entities in networks of transactional information. The present disclosure may find particular use in detecting illicit activities in cryptocurrency systems.

**BACKGROUND TO THE INVENTION**

There are many examples of networked information in data processing. For example, in social networks, network nodes may correspond to people. Connections between such nodes can represent relationships, for example friendship and/or family relationships. In financial networks, the affairs of payees and payers or borrowers and lenders can be represented by account nodes interconnected by transactions between those nodes. Similarly in telephone or online communications networks, nodes corresponding to telephone or e-mail accounts can be related by calls, messages or correspondence between those accounts. Analysing the networks of connections around a node of a network can reveal characteristic information about the node itself.

In cryptocurrency networks, such as the Bitcoin blockchain, entities (e.g. Bitcoin addresses) can be represented by nodes, and a flow of Bitcoins between entities can be represented by edges. Thus, the cryptocurrency network can provide characteristic information about the different transactions present in the network. Illicit parties, such as criminals and fraudsters, may utilise financial networks, such as cryptocurrency networks, to carry out illicit activities. These illicit activities may include money laundering, terrorist financing, and various forms of fraud. In the context of a network of information, illicit parties may use a large number of nodes (e.g. Bitcoin addresses) to move laundered or stolen cryptocurrency around and evade detection. Analysing the topological properties of the network can provide some insight into money laundering behaviour. However, such analysis can be difficult to implement in networks having large numbers of nodes and edges, and in cases where the transactional information is incomplete i.e. where nodes or edges are missing from the dataset representing the network.

The importance of detecting and tracing illicit funds or activities in the crypto space cannot be overstated, as it is crucial for maintaining the integrity, security, and overall legitimacy of this rapidly evolving financial ecosystem. Proliferation of illicit activities in cryptocurrency networks may undermine public trust in the cryptocurrency system, thus stifling mainstream adoption.

The present disclosure has been devised to mitigate or overcome at least some of the above-mentioned problems.

**SUMMARY OF THE DISCLOSURE**

In accordance with an aspect of the present disclosure, there is provided a computer-implemented method for analysing a network of information comprising a plurality of interconnected nodes, the method comprising: accessing a graph dataset representative of a graph comprising a plurality of nodes and a plurality of directed edges, wherein the graph dataset comprises an initial risk parameter for each node and an initial weight for each directed edge; updating the graph dataset, wherein updating the graph dataset comprises applying a diffusion algorithm to the graph dataset until a predetermined condition is met, wherein the updated graph dataset comprises an updated risk parameter for each node; for each pair of nodes in the plurality of nodes, calculating a similarity score using the updated graph dataset, wherein the similarity score is indicative of the similarity between the nodes for which the similarity score is calculated.

Advantageously, the proposed method can detect or identify links between nodes that would otherwise be hidden. The proposed method requires a technical understanding of how the network of transactions operates, for example how the nodes representing transactions communicate with other nodes.

In some embodiments, the method further comprises performing an action based on the updated risk parameters. Advantageously, the proposed method of the disclosure may enable the detection of illicit activities, such as fraudulent activities, by one or more entities represented in a collection of nodes present in a graph dataset. Based on this detection, the proposed method of the disclosure may act to prevent such illicit activities from taking place.

In some embodiments, performing an action comprises identifying one or more nodes in the graph dataset as being illicit.

In some embodiments, identifying one or more nodes in the graph dataset as being illicit comprises, for each node having an initial risk parameter or updated risk parameter that meets a risk threshold, identifying the node as an illicit node.

In some embodiments, identifying one or more nodes in the graph dataset as being illicit comprises, for each pair of nodes having a similarity score that meets a similarity threshold, if one of the nodes in the pair has an initial risk parameter or updated risk parameter that meets the risk threshold, identifying each node in the pair of nodes as an illicit node.

In some embodiments, performing an action comprises receiving a request for a transaction, wherein the request for a transaction identifies one or more nodes in the graph dataset.

In some embodiments, performing an action comprises blocking or preventing the transaction based on one or more nodes identified in the transaction being identified as an illicit node. Advantageously, blocking a transaction in this way can prevent illicit activities from taking place, such as theft of data or money laundering.

In some embodiments, performing an action comprises allowing or facilitating the transaction based on none of the nodes identified in the transaction being identified as an illicit node.

In some embodiments, updating the graph dataset comprises initialising an adjacency matrix for the graph dataset.

In some embodiments, updating the graph dataset comprises determining an outdegree matrix for the graph dataset.

In some embodiments, updating the graph dataset comprises calculating a Laplacian using the adjacency matrix and the outdegree matrix.

In some embodiments, updating the graph dataset comprises using the Laplacian to determine the updated risk parameters for each node.

In some embodiments, updating the graph dataset comprises solving a differential equation.

In some embodiments, applying the diffusion algorithm comprises solving a differential equation using the initial risk parameter vector and the Laplacian. Advantageously, implementing the diffusion algorithm allows the initial risk parameters, which may be confined to a limited number of nodes, to diffuse into the other parts of the graph and allow the identification of nodes strongly linked to high-risk nodes.

In some embodiments, the predetermined condition is a convergence condition and/or a time condition.

In some embodiments, updating the graph dataset comprises applying the diffusion algorithm to the graph dataset for a predetermined time period.

In some embodiments, updating the graph dataset comprises applying the diffusion algorithm to the graph dataset until the rate of change of the risk parameters is below a predetermined threshold.

In some embodiments, accessing the graph dataset comprises generating the graph dataset based on transaction data.

In some embodiments, accessing the graph dataset comprises saving the graph dataset in a memory unit.

In some embodiments, accessing the graph dataset comprises retrieving the graph dataset from a memory unit.

In some embodiments, the method may be carried out at a quantum computer and/or a classical computer. Advantageously, performing the proposed method with a combination of classical computing and quantum computing devices provides a means for more quickly updating risk parameters. An advantage provided by the improved speed at which the risk parameters are updated may lie in an ability to more quickly identify possible nodes associated with illicit and/or fraudulent behaviour. Thus, actions in response to such identification may be more quickly carried out.

In accordance with an aspect of the present disclosure, there is provided a computer program product comprising computer readable instructions stored on a computer readable medium which when executed in a computing device are arranged to perform the steps of a method for analysing a network of information comprising a plurality of interconnected nodes.

In accordance with an aspect of the present disclosure, there is provided a network analysis tool for analysing a network of information comprising a plurality of interconnected nodes, the tool being arranged to perform the steps of a method for analysing a network of information comprising a plurality of interconnected nodes.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

## BRIEF DESCRIPTION OF THE DRAWINGS

One or more embodiments of the disclosure will now be described, by way of example only, with reference to the accompanying drawings, in which:

Figure 1 shows an example computer system for implementing the present invention;

Figure 2 shows a network environment for implementing the present invention;

Figure 3 shows an example graph represented by a graph dataset;

Figure 4 illustrates a flow diagram of a computer-implemented method in accordance with an aspect of the present disclosure;

Figure 5 illustrates a flow diagram of a computer-implemented method in accordance with an aspect of the present disclosure;

Figure 6 illustrates a flow diagram of a computer-implemented method in accordance with an aspect of the present disclosure;

Figure 7 illustrates a flow diagram of a computer-implemented method in accordance with an aspect of the present disclosure;

Figure 8 illustrates a flow diagram of a computer-implemented method in accordance with an aspect of the present disclosure;

Figure 9 shows an example time evolution of the components of a risk parameter vector;

Figure 10 shows an example phase trajectory of components of a risk parameter vector;

Figure 11 shows a further example graph represented by a graph dataset; and

Figure 12 shows a further example phase trajectory of components of a risk parameter vector.

Note that the drawings are schematic and accompany the description, illustrating preferred and exemplary embodiments and not necessarily being drawn to scale.

## DETAILED DESCRIPTION

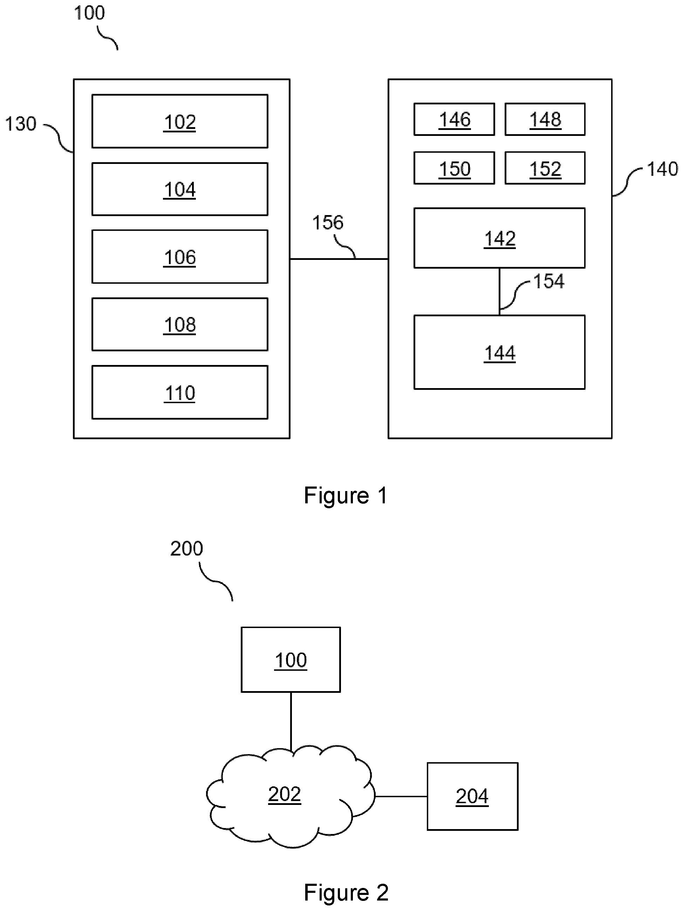

Figure 1 shows an example computing system 100 for implementing the present invention. One or more such computer systems 100 are arranged to perform or execute one or more steps of the methods described herein. In particular, software running on one or more computer systems 100 perform one or more steps of the methods described herein.

The computing system 100 comprises a classical computer 130 coupled to a quantum computer 140 via an interface 156.

The classical computer 130 comprises a processing element 102, a memory unit 104, an input/output (I/O) interface 106, a communications interface 108, and a bus 110. Whilst Figure 1 illustrates a classical computer 130 having particular components and in a particular arrangement, it can be envisaged that the classical computer 130 comprises any suitable number of components in any suitable arrangement of components. The classical computer 130 may further comprise additional classical computing elements as known in the art.

The processing element 102 is arranged to perform operations, such as arithmetical and logical operations, on data, for example data stored on the memory device 104. The processing element 102 is of any suitable construction for performing these operations. For example, the processing element 102 comprises one or more hardware components for performing these operations, such as processors, e.g., one or more central processing units (CPUs), accelerator processors, application specific processors and/or field programmable gate arrays (FPGAs), and other equipment such as Application Specific Integrated Circuits (ASICs). The processing element 102 performs operations including: fetching instructions associated with the methods disclosed herein from program memory, such as a RAM component of the memory device 104; decoding the instructions; and executing the instructions to carry out one or more steps of the methods described herein.

The memory unit 104 is arranged to communicate with the processing element 102, for example via the bus 110. The memory unit 104 comprises one or more hardware components, such as one or more primary memory units and one or more secondary memory units. The one or more primary memory units, for example including a random access memory (RAM) unit, can temporarily store data for reading and writing purposes by the processing element 102. The primary memory may be any suitable RAM, and may comprise one or more RAM units. The present disclosure is not limited to a particular type of primary memory. The one or more secondary memory units comprise memory, i.e., computer-readable storage in the form of a non-transitory computer-readable medium or media. The memory may comprise one or more memory units employing one or more memory media, e.g. a magnetic medium such as a hard disk; an electronic medium such as a solid-state drive (SSD), flash memory or EEPROM; and/or an optical medium such as an optical disk drive. The secondary memory may be any suitable memory, and may comprise one or more secondary memory units. The present disclosure is not limited to a particular type of secondary memory. The memory stores software comprising a respective instance of at least one client application arranged to run on the processing element 102 for carrying out various steps of the methods disclosed herein. The client application may be initially provided to the classical computer 130 on suitable computer-readable storage medium or media, e.g., downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The I/O interface 106 facilitates communication between the classical computer 130 and one or more computer devices arranged to facilitate communication between a user and the classical computer 130. For example, the one or more computer devices may include, but is not limited to including, a display device, a keyboard, a speaker, a printer, any other suitable device, or any combination of devices thereof.

The communication interface 108 facilitates communication between the classical computer 130 and any other one or more computer systems and/or one or more networks. The communication interface 108 may comprise a network interface controller, network adapter, wireless NIC, or wireless adapter for communicating with a network.

The quantum computer 140 comprises a quantum computing unit 142 and a quantum memory unit 144, a plurality of coupling devices 146, a bias device 148, and a state determination device 150. The quantum computing unit 142 comprises a number N of qubits 152. The qubits 152 may be for example, superconducting flux devices 152 having a circulating current. For example, the superconducting flux devices 152 may comprise a loop of superconducting material interrupted by at least one Josephson junction, as is known in the art. Further qubit implementations may be envisaged. The quantum computing unit 142 is configured to provide data to, and receive data from, the quantum memory unit 144 by means of a memory interface 154. A "state" of the quantum computing unit 142 corresponds to the respective state of all of the N qubits 152. An example state of a qubit is a 0 state. The 0 state may correspond to, for example, a clockwise current around the superconducting flux devices 152 which may induce a downward magnetic field. A counterclockwise current around the superconducting flux devices may induce an upwards magnetic field which references a state 1. The state of the quantum computing unit 142 may be described by a bit string having a length N. Thus, there are $2^N$ possible configurations for the state of the quantum computing unit 142. The quantum computer 140 is preferably suitable for implementing quantum circuits. Other quantum computing models may be envisaged.

Figure 2 shows an example network environment for facilitating implementation of the present invention.

The classical computer 130 may communicate with any network, such as a network 202, via the communication interface 108. The network 202 may comprise an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or any combination thereof. Any network 202 may be envisaged. The network 202 can facilitate communication between the classical computer 130 and one or more third party computer systems 204. It will be appreciated that the classical computer 130 and the third party computer systems 204 may be connected to each other directly, such that the network 202 is not needed.

Third party computing system 204 may be a network addressable computing system. Third party computing system 204 may generate, store, receive, and transmit data, such as, for example, a graph dataset, as will be discussed further herein. Communication with the third party computing system 204 may comprise the use of one or more application programming interfaces (APIs). One or more third party computing systems 204 may be present, and each of the one or more third party computing systems 204 may be associated with a respective third party.

Example Graph Dataset

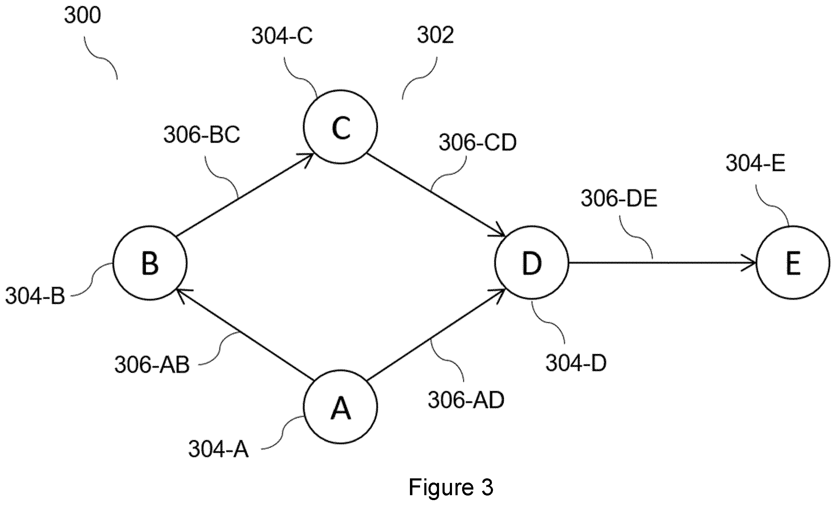

Figure 3 shows an example graph 300 represented by a graph dataset 302. The graph 300 comprises a plurality of nodes 304 and a plurality of directed edges 306. The edges 306 connect the nodes 304. The nodes 304 represent entities (e.g. account numbers, Bitcoin addresses, etc.), and the directed edges 306 represent a flow of data, items and/or quantities associated with the entities (e.g., transfer of data or transactions between accounts, flow of Bitcoins between Bitcoin addresses, etc.). The direction of each edge 306 (see arrows in Figure 3) represents the direction of the flow of data, items and/or quantities. The graph 300 is for illustration purposes only, and in practice the graph dataset 302 contemplated by the present disclosure comprises any quantity of nodes 304 and any quantity of edges 306.

In the example of Figure 3, each node 304 is connected to one or more other nodes via respective directed edges 306. For example, the node A labelled 304-A is connected to node B labelled 304-B via an edge labelled 306-AB. The edge 306-AB is a directed edge and represents a flow of data, items or quantities from the first node (node A labelled 304-A) to the second node (node B labelled 304-B). Node A 304-A is also connected to node D labelled 304-D via an edge labelled 306-AD.

The graph dataset 302 comprises data representative of a node identifier associated with each node 304. For example, where each node 304 is associated with a respective Bitcoin address, the graph dataset comprises address ID data representative of a node identifier associated with each node 304. The address ID may be a unique public identifier, generated by known means. The address ID may be a unique string of characters that was randomly generated at the point of creation of the address. The address ID is thus useable as a means for uniquely identifying a node or entity. In some embodiments, the node identifier may be anonymised so as to protect the identity of the entity associated with the node.

The graph dataset 302 further comprises data representative of edge values associated with each edge 306. For example, each edge 306 is associated with a particular transaction having a transaction amount (e.g., an amount of Bitcoin). Thus, the graph dataset comprises transaction data representative of an edge value associated with each edge 306.

The graph dataset 302 further comprises data representative of a directionality of each of the one or more edges 306. For example, each edge 306 is associated with particular direction data indicative of a flow of data, e.g., a transaction direction, from a first node to a second node. In Figure 3 the directionality data in the graph 300 is represented by an arrow showing the flow of a transaction from a first node to a second node. For example, a transaction or transfer of data from node 304-A to node 304B is indicated by the arrow direction of edge 306-AB from node A to node B.

The graph dataset 302 may further comprise additional data. For example, the additional data may comprise additional information associated with each node (such as a contact number, an email address, a device ID, an IP address associated with the node, etc.) and/or additional edge information (such as time IP address associated with the edge or transaction, etc.).

Analysing a Network of Information

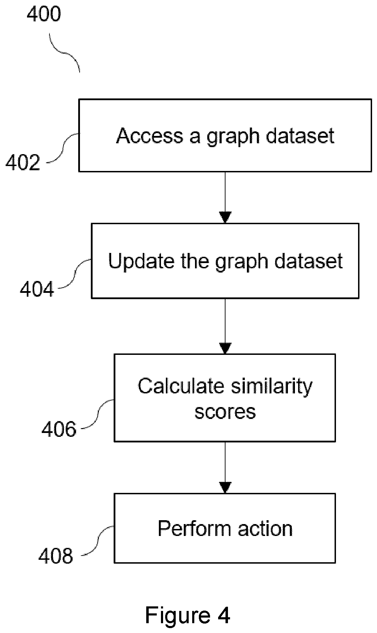

Figure 4 shows a flow diagram of a method 400 for analysing a network of information comprising a plurality of interconnected nodes, in accordance with an aspect of the present disclosure. The method 400 comprises: accessing a graph dataset (step 402); updating the graph dataset (step 404); calculating similarity scores (step 406); and performing an action (step 408).

The method 400 may be carried out at any suitable computing system or node, for example a central server, a banking system or a security system, which may be implemented by the computing system 100 of Figure 1 comprising the classical computer 130 and the quantum computer 140. The processing element 102 may load instructions for carrying out one or more of the steps of the method 400 into the memory unit 104 for execution by the classical computer 130. Thus, the computing system 100 may be a tool for analysing a network of information.

The network of information in the present example may be a cryptographic network of transactions and transaction amounts. The network of information may comprise one or more nodes associated with 'illicit' activities or entities. The term 'illicit' may be understood to mean activities performed by, or associated with, illicit parties, such as criminals or fraudsters. Such activities may include, but are not limited to, money laundering, terrorist financing, and various forms of fraud. Advantageously, the method 400 can be used to identify links between nodes that would otherwise be hidden. The method 400 requires a technical understanding of how the network of transactions operates, for example how the nodes representing transactions communicate with other nodes.

Accessing a graph dataset

At step 402 the method 400 comprises accessing a graph dataset. In particular, step 402 comprises accessing, using e.g. the classical computer 130, a graph dataset which comprises graph data representative of a graph $G$ comprising a plurality of nodes and a plurality of edges connecting the nodes. For example, the graph dataset may be the example graph dataset 302 shown in Figure 3.

The graph dataset comprises graph data representative of a graph $G = (V, E)$ comprising a plurality of nodes or vertices $V$ and a plurality of weighted directed edges $E$ connecting the nodes or vertices. A node represents an entity, and the edges represent some form of connection or transaction between the nodes. For example, in the context of a financial transaction graph representative of a network of transactions, a node may represent an account associated with an individual or other entity, and edges may represent transactions between each account. It will be appreciated that the graph data set can represent any suitable type of graph, for example a graph comprising nodes corresponding with bank accounts and edges corresponding with transactions between said bank accounts. In examples, a Bitcoin transaction graph may comprise nodes associated with Bitcoin addresses, and edges showing the flow of bitcoins between the Bitcoin addresses.

The graph dataset may be accessed by any suitable means. For example, the processing unit 102 may access the graph dataset by communicating with the third party computing system 204 via the network 202. In particular, the processing unit 102 can transmit an access request to the third party computing system 204, and the third party computing system 204 can transmit data comprising the graph dataset to the classical computer 130. Alternatively, the graph dataset may be stored in the memory unit 104, for example as a consequence of the graph dataset being provided to the classical computer 130 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc. Alternatively, the graph dataset may be generated by the processing unit 102 based on transaction data stored on the memory unit 104 and accessed by the processing unit 102.

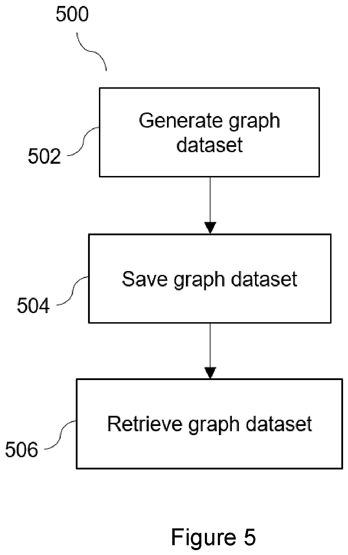

Figure 5 shows a flow diagram of an example method 500 for accessing a graph dataset, in accordance with an aspect of the present disclosure. In particular, the method 500 is a sub-method of method 400, and may be carried out at step 402 of the method 400.

The method 500 can be implemented by a computer system, such as the computing system 100 of Figure 1 comprising the classical computer 130 and the quantum computer 140. For example, the processing element 102 may load instructions for carrying out one or more of the steps of the method 500 into the memory unit 104 for execution by the classical computer 130. Thus, the computing system 100 may be a tool for accessing a graph dataset.

At step 502 the method 500 comprises generating a graph dataset. The graph dataset comprises an initial risk parameter for each node. In an embodiment, the initial risk parameters of one or more nodes are determined based on data present in the graph dataset. For example, the graph dataset comprises predetermined risk data representative of a risk parameter associated with one or more nodes of the plurality of nodes, such that the initial risk parameters may be determined by reading the risk data in the risk dataset.

The initial risk parameters associated with the one or more nodes may be determined based on a risk parameter label. For example, at least one node may be labelled as 'illicit'. One or more other nodes may be labelled as 'licit', although such labelling of licit nodes may not be necessary. The remaining nodes may be unlabelled or labelled as 'unknown'. By 'illicit', it is meant that the respective node has a risk factor above a threshold level (e.g. $\geq$99%), wherein such a risk factor indicates that the node has a high likelihood of corresponding to a user or entity having a particular characteristic, such as being known to be associated with fraudulent or illegal transactions and/or a fraudulent user or entity. In examples, illicit nodes may be considered as nodes having a risk parameter that is indicative of activities outside of the normal or intended use of the particular network. For example, identification of illicit nodes in a cryptographic network facilitates the identification of potentially fraudulent behaviour. By 'licit', it is meant that the respective node has a risk factor below a threshold level (e.g. $\leq$1%), wherein such a risk factor indicates that the node has a low likelihood of corresponding to a user or entity having a particular characteristic, such as being known to be associated with fraudulent or illegal transactions and/or a fraudulent user or entity.

The initial risk parameters associated with one or more nodes comprise a numerical value. The numerical value of the initial risk parameter is a real number between 0 and 1. A node labelled as 'illicit' is assigned an initial risk parameter of 0.99. A node labelled as 'licit' is assigned an initial risk parameter of 0.01. A node that is unlabelled or labelled as 'unknown' is assigned an initial risk parameter of 0.50. It will be understood that these choices are arbitrary, and that the nodes may be assigned any numerical value between 0 and 1, indicative of a likelihood that a node is an illicit node. It will be appreciated that the numerical value is not limited to being between '0' and '1', and that any suitable range of values can be used. It will be further appreciated that the risk parameter may be of any suitable form for indicating whether (or how likely) one or more nodes are illicit nodes.

In other examples, the initial risk parameters of the one or more nodes are determined by other means. For example, the initial risk parameters may be determined based on data of the graph dataset, even if there is no predetermined risk data. As another example, the initial risk parameters of the one or more nodes are determined by receiving an input assigning initial risk parameters to respective nodes. For example, a user may input the initial risk parameters to the computer system 100 for use in step 502. In terms of an initial risk parameter function:

$$I \times X^n \rightarrow [0,1]$$

Wherein $I$ is the set of nodes, and $X^n$ is the Cartesian product of all features that contribute to the risk. For example, risk (A, 'IP', 'contact_number', 'age') = 0.9 indicates that the risk of node A based on the IP address, contact number, and the age, is 0.9.

It may be determined that some nodes have no associated initial risk parameter, for example if the graph dataset comprises no risk data associated with these nodes. These nodes may be representative of transactions or entities that could be licit or illicit. These nodes are assigned any suitable initial risk parameter. For example, these nodes are assigned an initial risk parameter of 0.5.

The graph dataset comprises a weight for each directed edge. The weight represents a transaction amount between nodes. For example, the weight of the edge between a first node and a second node may be proportional to an amount of a transaction (e.g. an amount of currency, or an amount of data, or a number of emails/messages, etc.) from the first node to the second node. The weight of the node may be proportional to the sum of a plurality of transactions between the respective nodes. Each weight takes a positive value, and each edge is a directed edge showing the positive transfer of funds from a first node to a second node.

At step 504 the method 500 comprises saving the graph data set. In particular, at step 504 the graph data set generated in step 502 is saved. The graph dataset may be saved by any suitable means. For example, the graph dataset may be saved in the memory unit 104 after the graph dataset has been generated by and/or provided to the classical computer 130. The memory used to save the graph data set may comprise one or more hardware components, such as one or more primary memory units and one or more secondary memory units as noted above with respect to Figure 1. The memory used to save the graph data set may be local or remote (e.g. located at a server) and may comprise one or more memory units employing one or more memory media, e.g. a magnetic medium such as a hard disk; an electronic medium such as a solid-state drive (SSD), flash memory or EEPROM; and/or an optical medium such as an optical disk drive.

At step 506 the method 500 comprises retrieving the graph data set. In examples, the graph data set retrieved at step 506 is the graph data set generated in step 502 and saved in step 504. The graph data set may be retrieved from the memory of the classical computer 130 and/or from another suitable computer-readable storage medium or media, e.g., downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

As will be appreciated, steps 502 and 504 are optional. In some embodiments, the graph dataset retrieved at step 506 may be retrieved from a third party computing system, such as the third party computing system 204 shown in Figure 2, which generates suitable risk data for use in the method 400.

Updating a graph dataset

Returning to Figure 4, at step 404 the method 400 comprises updating the graph dataset. In some embodiments, updating the graph dataset at step 404 comprises applying a diffusion algorithm to the graph dataset. The graph dataset is updated at step 404 to allow risk to propagate through the graph of information, according to the network topology and the amount (i.e., magnitude) of transactions and risk factors. Allowing the risk to propagate through the network in this way allows links between nodes to be identified, i.e. links which would otherwise remain hidden and/or be difficult or impossible to detect using conventional methods.

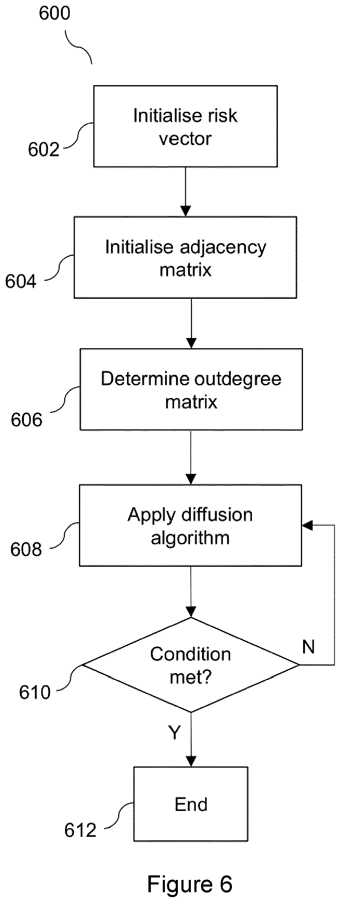

Figure 6 shows a flow diagram of a method 600 for updating the graph dataset, in accordance with an aspect of the present disclosure. In particular, the method 600 is a sub-method of method 400, and may be carried out at step 404 of the method 400.

The method 600 can be implemented by a computer system, such as the computing system 100 of Figure 1 comprising the classical computer 130 and the quantum computer 140. For example, the processing element 102 may load instructions for carrying out one or more of the steps of the method 600 into the memory unit 104 for execution by the classical computer 130. Thus, the computing system 100 may be a tool for updating a graph dataset.

At step 602 the method 600 comprises initialising a risk parameter vector. A risk parameter vector is an n-dimensional vector $x$ of risk parameters of all nodes in a graph $G$. The risk parameter vector $x$ can be defined as:

$$x = \begin{pmatrix} x_1 \\ \vdots \\ x_n \end{pmatrix}$$

wherein $x_i$ is a risk parameter of node $i$. The risk parameter vector initialised at step 602 is the initial risk parameter vector at time $t = 0$, denoted $x(t = 0)$ or $x_0$.

At step 604 the method 600 comprises initialising an adjacency matrix. In particular, the graph dataset is used to initialise an adjacency matrix, denoted $W$, for the graph $G$. The adjacency matrix $W$ is a square matrix used to represent the graph $G$, particularly the links between the respective nodes.

Consider a graph $G$ comprising five nodes. Where a first node $a$ is connected to another node $b$ via an edge, the value of the adjacency matrix $W$ at $(a, b)$ will be the weight of the edge, a real number, for example 1 (e.g. $w_{a,b} = 1$), whereas if there is no edge connecting nodes $a$ and $b$ the value of the adjacency matrix $W$ at $(a, b)$ will be 0 (i.e. $w_{a,b} = 0$).

At step 606 the method 600 comprises determining an outdegree matrix. In particular, the graph dataset is used to generate an outdegree matrix, denoted $D_{out}$, for the graph $G$. The outdegree matrix $D_{out}$ is a diagonal square matrix which contains information about the number of directed edges which leave each node of the graph $G$. Where a node $i$ has $n$ outward edges, the value of the adjacency matrix $D_{out}$ at $(i, i)$ will be $n$ (i.e. $d_{i,i} = n$), and all off-diagonal elements are 0 (i.e. if $i \neq j$ then $d_{i,j} = 0$).

At step 608 the method 600 comprises applying a diffusion algorithm. In particular, a diffusion algorithm is applied to the risk parameter vector $x$. Applying the diffusion algorithm allows the initial risk parameters, which may be confined to a limited number of nodes, to diffuse into the other parts of the graph and allow the identification of further nodes as having a high risk of being illicit.

In an example, at step 608 a diffusion algorithm is applied to the graph dataset for the graph $G$. Applying a diffusion algorithm at step 608 comprises calculating a Laplacian $L$ for the graph $G$ and solving an Ordinary Differential Equation (ODE).

In examples, applying a diffusion algorithm at step 608 comprises using the adjacency matrix *W and* the outdegree matrix $D_{out}$ to calculate the Laplacian *L* for the graph *G*:

$$L = D_{out} - W$$

and solving the following ODE using the Laplacian *L* and the risk parameter vector *x* initialised in step 602,

$$\frac{dx}{dt} = -Lx$$

where *x = f(t)* and the above ODE is solved according to a partition of time steps $0 < t_1 < t_2 < \cdots$.

In another example, applying a diffusion algorithm at step 608 comprises using a non-linear system. In this example, the risk of each node is allowed to propagate through a network of transactions according to the amount of transaction and topology of the network. In this example the risk of a source node as well as the difference between the risk of the source node and the destination node along with the amount of transaction are used to determine the rate of the change of the risk of the source node. As will be understood, nodes having the greatest risk will have a greater effect on how risk is transferred through the network.

Consider a source node *i* with an associated risk of $u_i$ which sends an amount of money $c_{ij}$ to a receiving node *j* with associated risk $u_j$. Then, after the transaction, the risk of nodes *i* and *j* will be updated according to the following example diffusion equations,

$$\frac{du_i}{dt} = c_{ij}u_i\left(u_j - u_i\right)$$

$$\frac{du_j}{dt} = c_{ji}u_j\left(u_i - u_j\right)$$

Extending the example diffusion equations to consider all neighbours of each node, we have

$$\frac{du_i}{dt} = \sum_{j\in N(i)} c_{ij}\,u_i\left(u_j - u_i\right)$$

where *N(i)* is the set of all neighbors of node *i*. We now define an n-dimensional risk parameter vector $\vec{u}$ of risks as follows,

$$\vec{u} = \begin{pmatrix} u_1 \\ \vdots \\ u_n \end{pmatrix}$$

and define $s_i = \Sigma_{j\in N(i)}\, c_{ij}$ as the degree weight of node *i*. Next, we define a square matrix $S = diag(s_1, \ldots, s_n)$, and a weight matrix $C = (c_{ij})$, where $c_{ii} = 0$ and $c_{ij} = 0$ if there is no edge between nodes *i* and *j*.

In this example, the diffusion equation in the matrix form is as follows,

$$\frac{du}{dt} + S\,\vec{u} \odot \vec{u} - \vec{u} \odot C\vec{u} = 0$$

where $\vec{u}(0) = \vec{u}_0$ is the initial risk vector and $\odot$ is Hadamard product. This is a non-linear system of Ordinary Differential Equations and has a unique solution that allows the diffusion of risk through a transaction network.

At step 610 the method 600 comprises determining whether a predetermined condition has been met. In examples, the predetermined condition may be a convergence condition, a time condition and/or a combination of both. For example, the predetermined condition may be a convergence condition, such as a condition which stipulates that the diffusion algorithm must be applied to the graph until the rate of change of the risk parameter vector *x* (and/or the components thereof) is below a predetermined threshold. In other examples, the predetermined condition may be that the diffusion algorithm must be applied for a predetermined time period, and/or for a predetermined number of time steps.

In an illustrative example, the predetermined condition may cause the diffusion algorithm to be applied until a time $t_n$. The time $t_n$ may correspond to a time threshold, such as 2 seconds or 20 time steps etc., in which case the predetermined condition will be met after 2 seconds or 20 time steps, etc. Alternatively, the time $t_n$ may correspond to a time at which the rate of change of the risk parameter vector $x$ is less than a threshold $\varepsilon$ (e.g. 1%), i.e. when $\|x(t_n) - x(t_{n+1})\|$ $< \varepsilon$. In such cases the predetermined condition will be met when the difference in the magnitude of the risk parameter vector x changes by less than $\varepsilon$ (e.g. 1%) between cycles or predetermined time periods.

If it is determined at step 610 that the predetermined condition has not been met (in which case the 'N' branch from step 610 is followed), then the method 400 returns to step 606. If it is determined at step 610 that the predetermined condition has been met (in which case the 'Y' branch from step 610 is followed), then the method 600 proceeds to step 612 where the method ends. As will be appreciated, the determination at step 610 ensures that the graph dataset is updated until the predetermined condition has been met.

At step 612 the method 600 ends. At this stage, the diffusion algorithm will no longer be applied and the risk parameter vector x will corresponds to an updated risk parameter vector $x_t$.

Optionally, at step 406 the method 400, the Dijkstra (or Floyd-Warshal) Algorithm is run on $\hat{G} = (V, \hat{E})$ where the weights $\widehat{w_{a,b}}$ here are the reverse of the weights in the original graph, i.e., $\widehat{w_{a,b}} = \dfrac{1}{w_{a,b}}$. Here V is the set of the vertices of the graph (i.e. the set of all nodes), $E$ is the set of all connections (i.e. all edges) and $\hat{E}$ is the set of all connections with reverse weights.

Calculating similarity scores

Returning to figure 4, at step 408 the method 400 comprises calculating similarity scores for the graph dataset. In particular, step 408 comprises calculating, for each pair of nodes in the graph dataset, a similarity score. The similarity scores are calculated using the updated graph dataset i.e. the graph dataset after the diffusion algorithm has been applied to the graph dataset. Each similarity score is indicative of the similarity between the two nodes for which the similarity score is calculated.

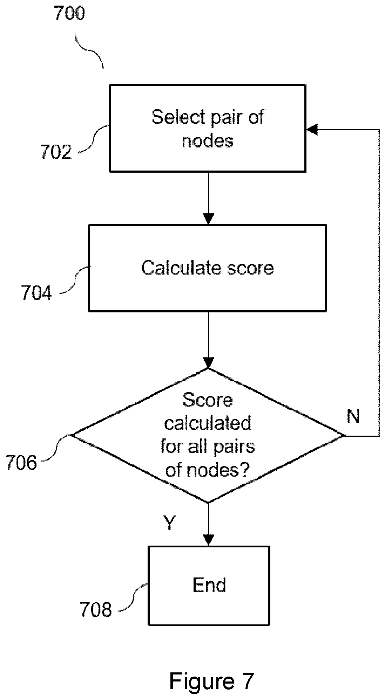

Figure 7 shows a flow diagram of a method 700 for calculating similarity scores, in accordance with an aspect of the present disclosure. In particular, the method 700 is a sub-method of method 400, and may be carried out at step 406 of the method 400.

The method 700 can be implemented by a computer system, such as the computing system 100 of Figure 1 comprising the classical computer 130 and the quantum computer 140. For example, the processing element 102 may load instructions for carrying out one or more of the steps of the method 700 into the memory unit 104 for execution by the classical computer 130. Thus, the computing system 100 may be a tool for calculating similarity scores for a graph dataset.

At step 702 the method 700 comprises selecting a pair of nodes. For example, consider a graph $G$ comprising five nodes. At step 702 a first node $a$ is selected and another node $b$ is also selected.

At step 704 the method 700 comprises calculating a score. In particular, a score $S$ is calculated for the pair of nodes selected at step 702. The calculated similarity score $S(a, b)$ indicates the similarity between two nodes $a$ and $b$.

Calculating a score at step 704 comprises determining a length $l$ between the two nodes selected in step 702. In particular, the calculated length $l(a, b)$ is the length of the shortest path between the nodes $a$ and $b$.

Calculating a score at step 704 further comprises determining a quantity $\chi$ according to the following function,

$$\chi(a,b) = \begin{cases} \dfrac{1}{l(a,b)}, & \text{if there is a directed path from } a \text{ to } b \\ \dfrac{1}{|V|^3}, & \text{if there is no directed path from } a \text{ to } b \end{cases}$$

where $V$ is the set of vertices of the graph (i.e. the set of all nodes), and $|V|$ is the number of nodes in the graph.

At step 704 the similarity score $S$ between nodes $a$ and $b$ is calculated as:

$$S(a,b) = \chi(a,b) * (\deg_{out}(a) + \delta) * (\deg_{in}(b) + \delta) * e^{-\left(x_a(t_n) - x_b(t_n)\right)^2}$$

where $x_a(t_n)$ is the risk parameter of node $a$ at time $t_n$, $x_b(t_n)$ is the risk parameter of node $b$ at time $t_n$, $deg_{out}(a)$ is the number of outward directed edges from node $a$, $deg_{in}(b)$ is the number of inward directed edges to node $b$ and $\delta > 0$ is a very small real number (e.g. 1E-5). As will be appreciated, time $t_n$ is the time at which the condition at step 610 has been met (i.e. $x_a$

and $x_b$ are components of the updated risk parameter vector $x_t$).

At step 704 the similarity score $S$ between nodes $a$ and $b$ may be normalised to 0 and 1. In this case, values closed to 1 indicate high correlation between nodes $a$ and $b$, and values closed to 0 indicate low correlation between nodes $a$ and $b$.

At step 704 the method 700 may also comprise saving the calculated score. The calculated score may be saved by any suitable means. For example, the calculated score may be saved in the memory unit 104 of the classical computer 130. The memory used to save the calculated score may comprise one or more hardware components, such as one or more primary memory units and one or more secondary memory units as noted above with respect to Figure 1. The memory used to save the graph data set may be local or remote (e.g. located at a server) and may comprise one or more memory units employing one or more memory media, e.g. a magnetic medium such as a hard disk; an electronic medium such as a solid-state drive (SSD), flash memory or EEPROM; and/or an optical medium such as an optical disk drive.

At step 706 the method 700 comprises determining whether a similarity score $S$ has been calculated for all pairs of nodes in the graph dataset. For example, at step 706 the number of similarity scores that have been calculated may be compared with the number of pairs of nodes in the graph dataset. In such an example, where the number of similarity scores that have been calculated is less than the number of pairs of nodes in the graph dataset, then it is determined that a similarity score has not been calculated for all pairs of nodes in the graph dataset.

If it is determined at step 706 that a similarity score has not been calculated for all pairs of nodes in the graph dataset (in which case the 'N' branch from step 706 is followed), then the method 700 returns to step 702 where a further set of nodes is selected. The method 702 may be configured so that each pair of nodes is selected only once. For example, successive pairs of nodes may be selected according to a procedure which prevents pairs of nodes for which a similarity score has already been generated from being selected again. If it is determined at step 706 that a similarity score has been calculated for all pairs of nodes in the graph dataset (in which case the 'Y' branch from step 706 is followed), then the method 700 proceeds to step 708 where the method ends. As will be appreciated, the determination at step 608 ensures that the similarity scores are calculated until scores have been calculated for all respective pairs.

At step 708 the method 700 ends. At step 708, a full set of similarity scores for each pair of nodes in the graph dataset will have been calculated. Optionally, the full set of similarity scores may be saved by any suitable means. For example, the full set of calculated scores may be saved in the memory unit 104 of the classical computer 130. The memory used to save the full set of calculated scores may comprise one or more hardware components, such as one or more primary memory units and one or more secondary memory units as noted above with respect to Figure 1. The memory used to save the graph data set may be local or remote (e.g. located at a server) and may comprise one or more memory units employing one or more memory media, e.g. a magnetic medium such as a hard disk; an electronic medium such as a solid-state drive (SSD), flash memory or EEPROM; and/or an optical medium such as an optical disk drive.

Performing an action

Returning to figure 4, at step 408 the method 400 comprises performing an action. In examples, the action is a security action such as preventing a transfer of data or a transaction between nodes. In examples where each node is associated with a respective Bitcoin address, blocking a transaction may comprise preventing the transfer of Bitcoins between the addresses.

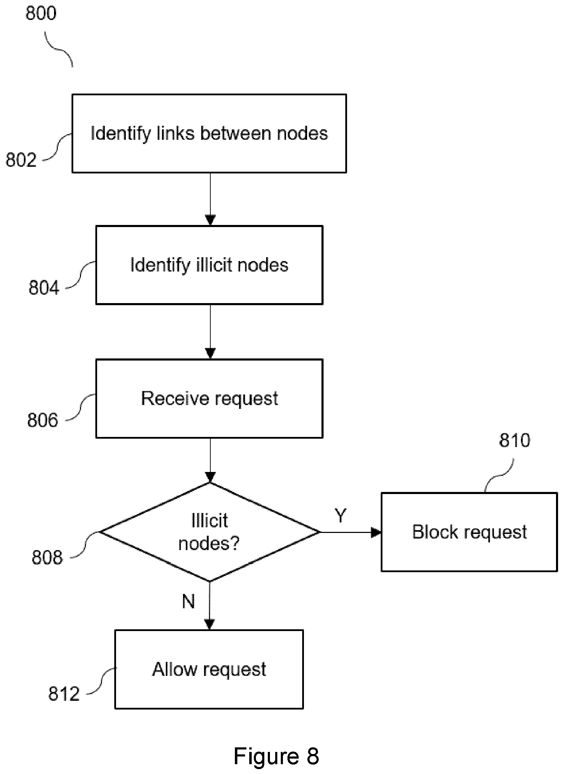

Figure 8 shows a flow diagram of a method 800 for performing an action, in accordance with an aspect of the present disclosure. In particular, the method 800 is a sub-method of method 400, and may be carried out at step 408 of the method 400.

The method 800 can be implemented by a computer system, such as the computing system 100 of Figure 1 comprising the classical computer 130 and the quantum computer 140. For example, the processing element 102 may load instructions for carrying out one or more of the steps of the method 800 into the memory unit 104 for execution by the classical computer 130. Thus, the computing system 100 may be a tool for performing an action, such as a security action.

At step 802 the method 800 comprises identifying links between nodes. In particular, step 802 comprises identifying links between pairs of nodes in the graph $G$. In examples, identifying links between nodes comprises comparing the similarity scores (calculated in step e.g. 406) with a threshold. This comparison may result in a binary classification, e.g. 'link'/'no link'. For example, if the similarity score calculated for two nodes $a$ and $b$ is greater than or equal to a similarity threshold, e.g. 0.7, then the two nodes $a$ and $b$ are identified as being linked, whereas if the similarity score is below the similarity threshold, then the two nodes $a$ and $b$ are identified as not being linked.

At step 804 the method 800 comprises identifying illicit nodes. In particular, step 802 comprises identifying illicit nodes in the graph $G$. In examples, identifying illicit nodes comprises comparing the risk parameters of each node with a risk threshold, for example 0.9. If the risk parameter of a particular node $a$ is greater than the risk threshold, then the node $a$ is identified as an illicit node. Furthermore, all nodes which have been identified as being linked to an illicit node will also be identified as an illicit node. The remaining nodes (i.e. all nodes having a risk parameter below the risk threshold and not linked to an illicit node) are each identified as licit nodes. The risk parameter used in the comparison with the risk threshold could be the initial risk parameter $R_i(t = 0)$ or the updated risk parameter $R_i(t = t_n)$ for that node $i$.

Thus, an initially 'unlabelled' node (having an initial risk parameter of 0.5) could be updated to a risk parameter of 0.8. At step 804 said node would be identified as an illicit node. Alternatively, an initially 'unlabelled' node could be updated to a risk parameter of 0.6, and be identified as being linked to another node having an updated risk parameter of 0.8. This is another way that an initially 'unlabelled' node could be identified as an illicit node.

At step 806 the method 800 comprises receiving a request. Particularly, the request may be a request for a transaction involving a first node and/or a second node represented in the graph dataset. In examples, the request identifies a plurality of nodes, for example a first node and a second node. The request may be a request to transfer e.g. data or currency from the first node to the second node.

At step 808 the method 800 comprises determining whether any illicit nodes are involved in the request. In particular, at step 808 each of the nodes identified in the request are compared with the nodes present in the graph data. At step 808, it will be determined that illicit nodes are involved in the request if the request identifies any of the nodes that have been identified as illicit at step 804. Conversely, at step 808 it will be determined that no illicit nodes (or only licit nodes) are involved in the request if the request does not identify any of the nodes that have been identified as illicit at step 804. As will be appreciated, the determination at step 808 can be used to ensure that requested transactions involving illicit nodes are prevented.

If it is determined at step 808 that there are illicit nodes involved in the request (in which case the 'Y' branch from step 808 is followed), then the method 800 proceeds to step 810 where the request is blocked. In examples, blocking a request may involve performing actions to effectively prevent the transaction from taking place, such as sending an instruction or notification to prevent transfer of data or funds. Alternatively, blocking a request may involve failing to perform one or more actions, such as not sending confirmation that the transaction may be allowed. Blocking a request may further include sending a notification or communication to a third party, such as a legal authority. For example, node identifiers (e.g., address IDs) associated with illicit nodes of the graph may be sent to the third party computing system 204 via the network 202. Advantageously, blocking a transaction in this way can prevent illicit activities from taking place, such as theft of data or money laundering.

If it is determined at step 808 that there are no illicit nodes involved in the request (in which case the 'N' branch from step 808 is followed), then the method 800 proceeds to step 812 where the request is allowed. In examples, allowing a request may involve performing actions to effectively facilitate the transaction, such as sending confirmation that the transaction may be allowed. Alternatively, allowing a request may involve failing to perform one or more actions, such as not sending an instruction or notification to prevent transfer of data or funds

Example implementation using real data

The following is an example execution of the method 400 using real data.

At step 402, a graph dataset is accessed. In the present example, the graph dataset corresponds to the example graph shown in Figure 3 and the initial risk parameters associated with the nodes 304 are as follows:

$$x_A(0) = 0.9, x_B(0) = 0.4, x_C(0) = 0.6, x_D(0) = 0.7, x_E(0) = 0.5$$

and the weight of each respective edge 306 is 1.

At step 404, the graph dataset is updated. The adjacency matrix $W$ of this network is:

$$W = \begin{bmatrix} 0 & 1 & 0 & 1 & 0 \\ 0 & 0 & 1 & 0 & 0 \\ 0 & 0 & 0 & 1 & 0 \\ 0 & 0 & 0 & 0 & 1 \\ 0 & 0 & 0 & 0 & 0 \end{bmatrix}$$

and the out-degree matrix is:

$$D_{out} = \begin{bmatrix} 2 & 0 & 0 & 0 & 0 \\ 0 & 1 & 0 & 0 & 0 \\ 0 & 0 & 1 & 0 & 0 \\ 0 & 0 & 0 & 1 & 0 \\ 0 & 0 & 0 & 0 & 0 \end{bmatrix}$$

The Laplacian of the graph, $L = D_{out} - W$, is:

$$L = \begin{bmatrix} 2 & -1 & 0 & -1 & 0 \\ 0 & 1 & -1 & 0 & 0 \\ 0 & 0 & 1 & -1 & 0 \\ 0 & 0 & 0 & 1 & -1 \\ 0 & 0 & 0 & 0 & 0 \end{bmatrix}$$

and the initial risk parameter vector $x_0$ is:

$$x_0 = \begin{bmatrix} 0.9 \\ 0.4 \\ 0.6 \\ 0.7 \\ 0.8 \end{bmatrix}$$

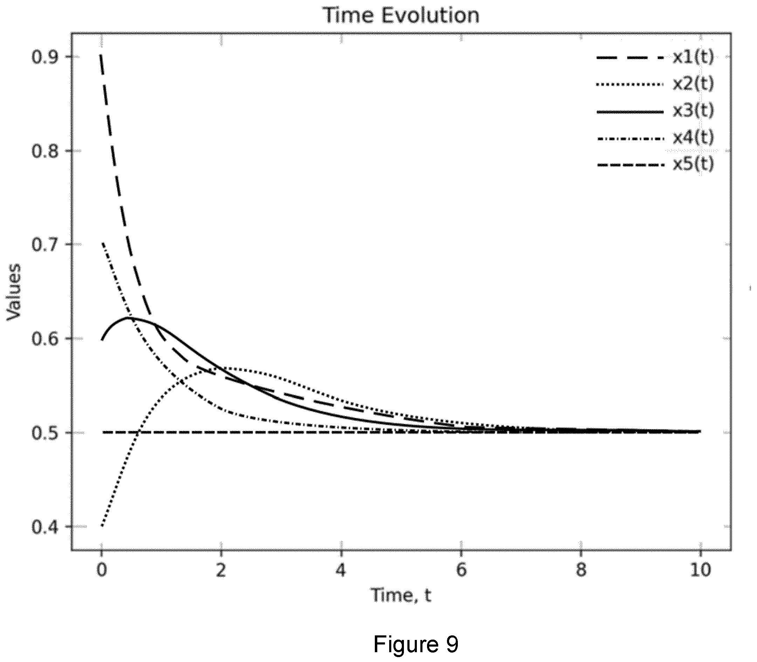

Figures 8 and 9 show the results of solving the following ODE

$$\frac{d x}{dt} = -Lx$$

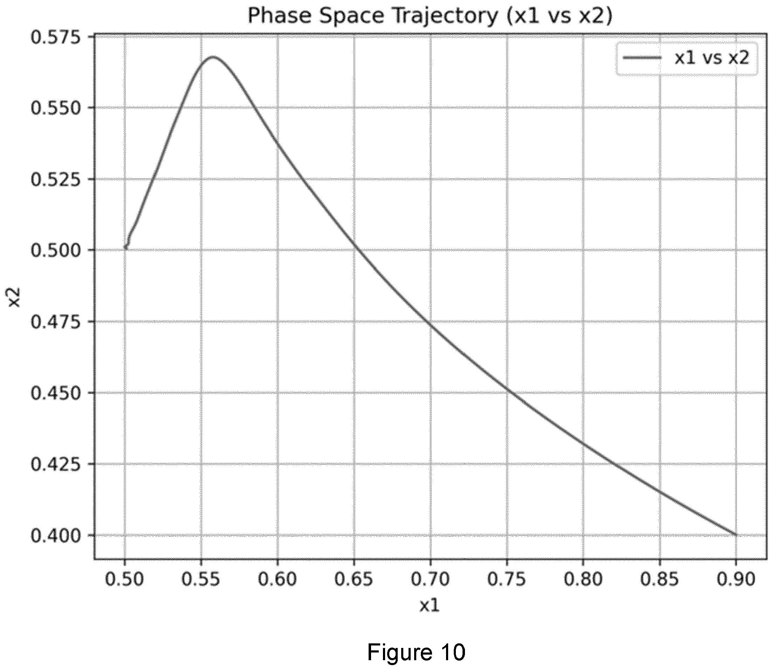

using the example Laplacian $L$ and initial risk parameter vector $x_0$ outlined above. In particular, Figure 9 shows the time evolution of the components of the risk parameter vector $x$ and Figure 10 shows the phase trajectory of two of the components of $x$ (i.e. $x_A$ denoted $x_1$, and $x_B$ denoted $x_2$).

At step 406, similarity scores $S$ for each pair of nodes is calculated. In this example, $S(x_i, x_j)$ is calculated for all pairs of nodes. The present example uses a simplified version of the score function:

$$S(x_i, x_j) = \frac{1}{l(i,j)} * e^{-(x_i - x_j)^2}$$

Where $l(i,j)$ is the length of the shortest path between nodes $i$ and $j$. Here we used Floyd-Warshal algorithm for this purpose. The result of the calculation is shown in Table 1, below.

Table 1: Calculated similarity scores for a plurality of nodes in the example graph shown in figure 3.

|       | $x_A$ | $x_B$   | $x_C$   | $x_D$   | $x_E$   |
|-------|-------|---------|---------|---------|---------|
| $x_A$ | -     | 0.99916 | 0.49938 | 0.99868 | 0.49933 |
| $x_B$ |       | -       | 0.99961 | 0.49976 | 0.33317 |
| $x_C$ |       |         | -       | 0.99991 | 0.49995 |
| $x_D$ |       |         |         | -       | 0.99998 |
| $x_E$ |       |         |         |         | -       |

The calculated similarity scores shown in Table 1 represent the probabilities of links between nodes. As can be seen, because $x_A$ connected to $x_B$ by a direct edge, the probability of a link between these nodes is almost 1. Link prediction probability for $x_A \rightarrow x_E$ is 0.499 while for $x_B \rightarrow x_E$ is 0.33. The lower probability of a link between the latter pair of nodes is due to the greater distance between nodes B and E when compared to the distance between nodes A and E. Applying the diffusion algorithm on the example graph dataset provides insights about the distribution of risk throughout the network, allowing the prediction of possible links between nodes that otherwise would remain hidden.

At step 408, an action is performed. In an example, step 408 may include identifying links between nodes. For example, from the results shown in Table 1, node A is determined to be linked to node B and node D, since the similarity scores between A/B and A/D are above the similarity threshold of 0.7. Node A is also identified as an illicit node, since the initial risk score for node A is 0.9 (i.e. greater than or equal to the risk threshold of 0.9). Therefore, if a request for a transaction between nodes A and D were received (step 806) then this transaction request would be blocked because node A is illicit, and because node D is linked to node A. Similarly, if a request for a transaction between nodes B and D were requested (step 806) then this transaction request would also be blocked because node A is illicit, and because nodes B and D are both linked to node A. This is despite the fact that the initial risk factors of nodes B and D are both below the risk threshold of 0.9.

As will be appreciated, the numerical example provided above is for illustrative purposes only. The example values and graph topology outlined above may be changed to reflect an alternative graph, in which case the methodology used will be the same, just the parameters will be changed. The similarity measure is a metric based on the distance and diffusion amount, so changing the weights will affect both the weighted distance and also the diffusion amount.

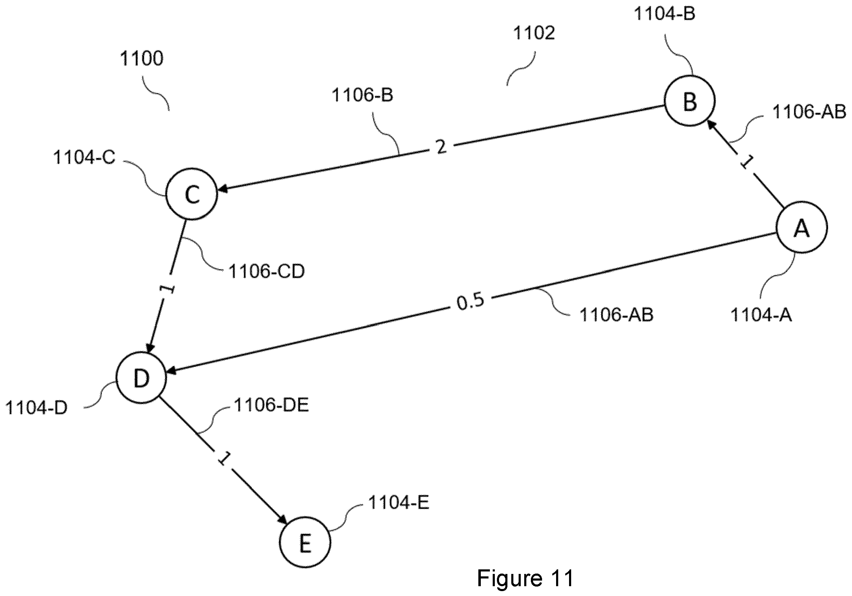

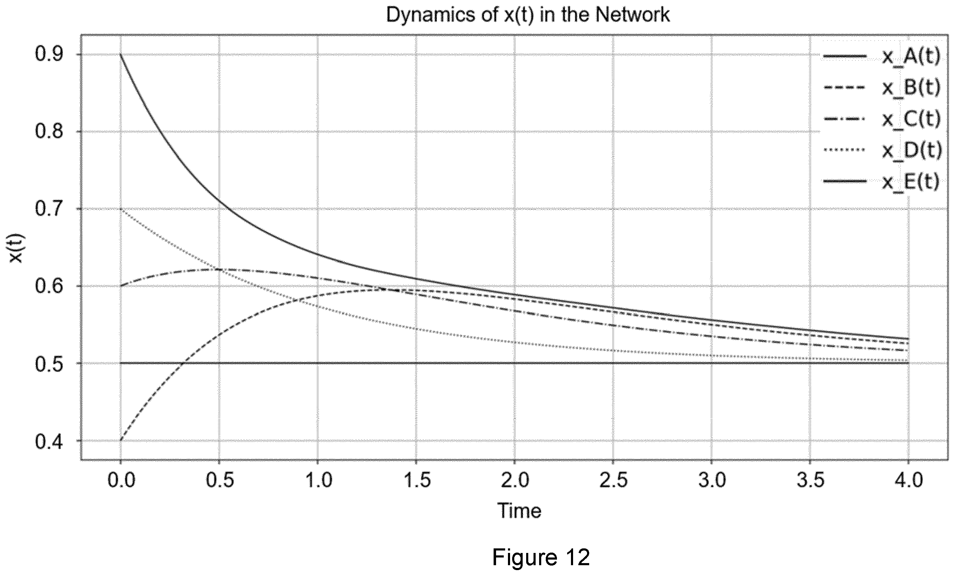

A further example graph 1100 represented by a graph dataset 1102 having nodes 1104 and edges 1106 is shown in figure 11. Repeating the above procedure for the further example graph 1100, figure 12 shows the time evolution of the risk parameters for each node, and the calculated similarity scores are provided in Table 2, below. The calculated similarity scores shown in Table 2 represent the probabilities of links between respective pairs of nodes in the graph 1100.

Table 2: Calculated similarity scores for a plurality of nodes in the further example graph shown in figure 11.

|          | $x_A$ | $x_B$   | $x_C$   | $x_D$   | $x_E$   |
|----------|-------|---------|---------|---------|---------|
| $x_A$    | -     | 0.99996 | 0.33326 | 1.99844 | 0.66602 |
| $x_B$    |       | -       | 0.49996 | 0.33317 | 0.24984 |
| $x_C$    |       |         | -       | 0.99984 | 0.49986 |
| $x_D$    |       |         |         | -       | 0.99998 |
| $x_E$    |       |         |         |         | -       |

Thus, the present methods and tools may provide a means for a user to easily inspect a network of information to find out whether a node of the network is trustworthy. For example, if the user inputs a node identifier that they intend to interact with, they may find out a likelihood of that node being an illicit node, or linked to an illicit node. In the context of a cryptocurrency network, the user may intend to transact with a particular wallet. By inputting the wallet ID to the present tool, the user may determine a likelihood of that wallet being an illicit wallet.

Some embodiments may assign computer processing tasks to recipient processors, for example, but not limited to CPUs, GPUs, DSPs, GP-GPUs, quantum processor and/or processors optimised for artificial intelligence tasks. In such embodiments, the processors are the recipients and the processing tasks are the opportunities. In such embodiments, in for example, a complex cloud computing infrastructure, a large number of tasks, of differing types, requiring execution may be received and a large number of processors may be housed within the cloud computing infrastructure.

The description provided herein may be directed to specific implementations. It should be understood that the discussion provided herein is provided for the purpose of enabling a person with ordinary skill in the art to make and use any subject matter defined herein by the subject matter of the claims.

It should be intended that the subject matter of the claims not be limited to the implementations and illustrations provided herein, but include modified forms of those implementations including portions of implementations and combinations of elements of different implementations in accordance with the claims. It should be appreciated that in the development of any such implementation, as in any engineering or design project, numerous implementation-specific decisions should be made to achieve a developers' specific goals, such as compliance with system-related and business related constraints, which may vary from one implementation to another. Moreover, it should be appreciated that such a development effort may be complex and time consuming, but would nevertheless be a routine undertaking of design, fabrication, and manufacture for those of ordinary skill having benefit of this disclosure.

Reference has been made in detail to various implementations, examples of which are illustrated in the accompanying drawings and Figures. In the detailed description, numerous specific details are set forth to provide a thorough understanding of the disclosure provided herein. However, the disclosure provided herein may be practiced without these specific details. In some other instances, well-known methods, procedures, components, circuits, and networks have not been described in detail so as not to unnecessarily obscure details of the embodiments.

It should also be understood that, although the terms first, second, etc. may be used herein to describe various elements, these elements should not be limited by these terms. These terms are only used to distinguish one element from another. For example, a first element could be termed a second element, and, similarly, a second element could be termed a first element. The first element and the second element are both elements, respectively, but they are not to be considered the same element.

The terminology used in the description of the disclosure provided herein is for the purpose of describing particular implementations and is not intended to limit the disclosure provided herein. As used in the description of the disclosure provided herein and appended claims, the singular forms "a," "an," and "the" are intended to include the plural forms as well, unless the context clearly indicates otherwise. The term "and/or" as used herein refers to and encompasses any and all possible combinations of one or more of the associated listed items. The terms "includes," "including," "comprises," and/or "comprising," when used in this specification, specify a presence of stated features, integers, steps, operations, elements, and/or components, but do not preclude the presence or addition of one or more other features, integers, steps, operations, elements, components and/or groups thereof.

As used herein, the term "if" may be construed to mean "when" or "upon" or "in response to determining" or "in response to detecting," depending on the context. Similarly, the phrase "if it is determined" or "if [a stated condition or event] is detected" may be construed to mean "upon determining" or "in response to determining" or "upon detecting [the stated condition or event]" or "in response to detecting [the stated condition or event]," depending on the context. The terms "up" and "down"; "upper" and "lower"; "upwardly" and "downwardly"; "below" and "above"; and other similar terms indicating relative positions above or below a given point or element may be used in connection with some implementations of various technologies described herein.

While the foregoing is directed to implementations of various techniques described herein, other and further implementations may be devised in accordance with the disclosure herein, which may be determined by the claims that follow. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method for analysing a network of information comprising a plurality of interconnected nodes, the method comprising:

   accessing a graph dataset representative of a graph comprising a plurality of nodes and a plurality of directed edges, wherein the graph dataset comprises an initial risk parameter for each node and an initial weight for each directed edge;
   updating the graph dataset, wherein updating the graph dataset comprises applying a diffusion algorithm to the graph dataset until a predetermined condition is met, wherein the updated graph dataset comprises an updated risk parameter for each node;
   for each pair of nodes in the plurality of nodes, calculating a similarity score using the updated graph dataset, wherein the similarity score is indicative of the similarity between the nodes for which the similarity score is calculated.

2. The method of claim 1, wherein the method further comprises:
   performing an action based on the updated risk parameters.

3. The method of claim 2, wherein performing an action comprises:
   identifying one or more nodes in the graph dataset as being illicit.

4. The method of claim 3, wherein identifying one or more nodes in the graph dataset as being illicit comprises:
   for each node having an initial risk parameter or updated risk parameter that meets a risk threshold, identifying the node as an illicit node.

5. The method of claim 3 or claim 4, wherein identifying one or more nodes in the graph dataset as being illicit comprises:
   for each pair of nodes having a similarity score that meets a similarity threshold, if one of the nodes in the pair has an initial risk parameter or updated risk parameter that meets the risk threshold, identifying each node in the pair of nodes as an illicit node.

6. The method of any one of claims 2 to 5, wherein performing an action comprises:

   receiving a request for a transaction, wherein the request for a transaction identifies one or more nodes in the graph dataset; and
   blocking or preventing the transaction based on one or more nodes identified in the transaction being identified as an illicit node; or
   allowing or facilitating the transaction based on none of the nodes identified in the transaction being identified as an illicit node.

7. The method of any preceding claim, wherein updating the graph dataset comprises:

    initialising an adjacency matrix for the graph dataset;
    determining an outdegree matrix for the graph dataset;
    calculating a Laplacian using the adjacency matrix and the outdegree matrix; and
    using the Laplacian to determine the updated risk parameters for each node.

8. The method of claim 7, wherein applying the diffusion algorithm comprises:
   solving a differential equation using the initial risk parameter vector and the Laplacian.

9. The method of any preceding claim, wherein the predetermined condition is a convergence condition and/or a time condition.

10. The method of any preceding claim, wherein updating the graph dataset comprises:
    applying the diffusion algorithm to the graph dataset for a predetermined time period.

11. The method of any preceding claim, wherein updating the graph dataset comprises:
    applying the diffusion algorithm to the graph dataset until the rate of change of the risk parameters is below a predetermined threshold.

12. The method of any preceding claim, wherein accessing the graph dataset comprises:

    generating the graph dataset based on transaction data; and
    saving the graph dataset in a memory unit.

13. The method of any preceding claim, wherein accessing the graph dataset comprises:
    retrieving the graph dataset from a memory unit.

14. A computer program product comprising computer readable instructions stored on a computer readable medium which when executed in a computing device are arranged to perform the steps of any previous claim.

15. A network analysis tool for analysing a network of information comprising a plurality of interconnected nodes, the tool being arranged to perform the steps of any of claims 1 to 13.

Figure 1

Figure 2

Figure 3

Figure 4

500

502 — Generate graph dataset

504 — Save graph dataset

506 — Retrieve graph dataset

Figure 5

600

```
        ┌─────────────────┐
  602   │ Initialise risk │
        │     vector      │
        └────────┬────────┘
                 │
                 ▼
        ┌─────────────────┐
  604   │ Initialise      │
        │ adjacency       │
        │ matrix          │
        └────────┬────────┘
                 │
                 ▼
        ┌─────────────────┐
  606   │ Determine       │
        │ outdegree       │
        │ matrix          │
        └────────┬────────┘
                 │
                 ▼
        ┌─────────────────┐
  608   │ Apply diffusion │◄──┐
        │ algorithm       │   │
        └────────┬────────┘   │
                 │            │
                 ▼            │
             ╱────────╲    N  │
  610      ╱ Condition ╲─────┘
           ╲   met?    ╱
             ╲────────╱
                 │ Y
                 ▼
        ┌─────────────────┐
  612   │       End       │
        └─────────────────┘
```

Figure 6

Figure 7

800

802 — Identify links between nodes

804 — Identify illicit nodes

806 — Receive request

808 — Illicit nodes? —Y→ 810 Block request

N

812 — Allow request

Figure 8

Figure 9

Figure 10

Figure 11

EP 4 629 153 A1

Dynamics of x(t) in the Network

Figure 12

Europäisches
Patentamt

European
Patent Office

Office européen
des brevets

# EUROPEAN SEARCH REPORT

**Application Number**

EP 24 16 8517

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 730 262 A (ALIBABA GROUP HOLDING LTD) 23 February 2018 (2018-02-23) * paragraph [0005] - paragraph [0185]; figures 1-5 * | 1-15 | INV. G06Q20/40 G06F16/901 |
| A | WO 2023/287520 A2 (MASTERCARD INTERNATIONAL INC [US]) 19 January 2023 (2023-01-19) * page 6, line 23 - page 7, line 19; figure 1 * | 1-15 | |

**TECHNICAL FIELDS SEARCHED (IPC)**

G06Q
G06F

The present search report has been drawn up for all claims

| Place of search | Date of completion of the search | Examiner |
|---|---|---|
| The Hague | 23 July 2024 | Raymaekers, Jens |

EPO FORM 1503 03.82 (P04C01)

## ANNEX TO THE EUROPEAN SEARCH REPORT
## ON EUROPEAN PATENT APPLICATION NO.

EP 24 16 8517

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2024

| Patent document cited in search report | | Publication date | Patent family member(s) | | Publication date |
|---|---|---|---|---|---|
| CN 107730262 | A | 23-02-2018 | NONE | | |
| WO 2023287520 | A2 | 19-01-2023 | EP | 4371043 A2 | 22-05-2024 |
| | | | GB | 2609016 A | 25-01-2023 |
| | | | WO | 2023287520 A2 | 19-01-2023 |

EPO FORM P0459

For more details about this annex : see Official Journal of the European Patent Office, No. 12/82